Europäisches Patentamt

European Patent Office

Office européen des brevets

(19)

(11) Veröffentlichungsnummer: **0 289 453**
**A1**

(12) **EUROPÄISCHE PATENTANMELDUNG**

(21) Anmeldenummer: **88810056.7**

(22) Anmeldetag: **01.02.88**

(51) Int. Cl.⁴: **B 23 Q 7/14**
**B 23 H 11/00**

(30) Priorität: **31.01.87 CH 349/87**

(43) Veröffentlichungstag der Anmeldung:
**02.11.88 Patentblatt 88/44**

(84) Benannte Vertragsstaaten: **ES**

(71) Anmelder: **REISHAUER AG.**
**Industriestrasse 36**
**CH-8304 Wallisellen (CH)**

(72) Erfinder: **Fenner, Hans-Ulrich**
**Unterwegli 9**
**CH-8404 Winterthur (CH)**

**Sieg, Arno**
**Via Castelrotto 2**
**CH-6600 Locarno (CH)**

**Bäumli, Christoph**
**Via Centro Sportivo 4**
**CH-6596 Gordola (CH)**

(74) Vertreter: **Punschke, Edgar Patentanwalt**
**Löwenstrasse 1**
**CH-8001 Zürich (CH)**

(54) **Palettenwechsler an Funkenerosionsmaschine.**

(57) Eine Vorrichtung zum Beschicken und Entladen einer Funkenerosionsmaschine mit Werkstück- und/oder Werkzeugpaletten weist eine Palettenstation neben der Maschine auf. Ferner ist ein mit der Palettenstation verbundener Palettenwechsler zur gesteuerten Übergabe der Paletten zwischen der Palettenstation und der Maschine vorgesehen. Der Palettenwechsler ist mit einem in Übergaberichtung ausfahrbaren Scherenantrieb (50) versehen, der als lineare Übersetzung eines Hubantriebs (40) ausgebildet ist. Die äussere Scherenschenkel (110) stehen auf der Antriebsseite mit dem Hubantrieb (40) in Verbindung, während die Innenschenkel der gleichen Scherenelemente ortsfest (101) fixiert sind. Auf der Abtriebsseite (146) des Scherenantriebs (50) sind lösbare Kupplungsmittel (31, 32) zur Kraftschlüssigen Verbindung mit den Paletten (9) vorgesehen. Die Anordnung garantiert eine konstante Verschiebegeschwindigkeit über die gesamte Hublänge, was besonders bei grossen Palettengewichten von erheblichem Vorteil ist.

Fig. 2

EP 0 289 453 A1

## Beschreibung

### PALETTENWECHSLER AN FUNKENEROSIONSMACHINE

Die Erfindung betrifft eine Vorrichtung zum Beschicken und Entladen einer Funkenerosionsmachine mit Werkstück- und/oder Werkzeugplatten, gemäss dem Oberbegriff des Patentanspruchs 1.

Funkenerosionsmachinen, insbesondere solche in automatischen Fertigungsstrassen, werden aus Gründen eines rationellen Fertigungsablaufes häufig mit Hilfe von Paletten beschickt, auf denen die zu bearbeitenden Wertstücke oder auch auswechselbare Werkzeuge der Maschine zugeführt und nach der Bearbeitung wieder abgeführt werden. Die Werkstücke lassen sich vor dem Zuführen ausserhalb der Maschine vorbereiten und für die Bearbeitung an der Maschine ausrichten. Die Palette wird dann mit dem montierten Werkstück auf den dafür eingerichteten Maschinentisch aufgesetzt und mit diesem verriegelt. Durch die Einführung von derartigen Paletten kann die Maschinenzeit optimal ausgenutzt werden, insbesondere wenn die Einrichtung in Verbindung einer numerischen Fertigungssteuerung betrieben wird, welche die Arbeitsabläuf an der Maschine sowie die Zu- und Abführung der Paletten selbsttätig steuert.

Au der US-PS 4 312 110 ist eine metallverarbeitende Werkzeugmaschine mit einer Paletten-Wechseleinrichtung bekannt, welche mit schienenartigen Führungselementen versehen ist. Die Führungsschienen wirken mit Übergabe- und Führungsmitteln zusammen, wobei eine horizontale Übergabe der Paletten von der Zuführungseinrichtung auf die Werkzeugmaschine durch Verschieben der Palette von einer Schienenführung auf die andere vorgesehen ist. Für Funkenerosionsmaschinen ist dieser Vorschlag wegen der zu erwartenden Positionierungsschwierigkeiten nicht geeignet.

Als Antriebe für die Verschiebung der Paletten werden im allgeminen Kettentriebe verwendet, welche jedoch für grössere Werkzeugmaschinen und für eine hochpräzise Fürhung der Paletten wenig geeignet sind. Kettentriebe neigen insbesondere zu Ruckbewegungen, welche such mit den hochpräzisen Funkenerosionsmaschinen und deren Steuerungen wenig gut ver tragen. Ferner sind Ketenntriebe wartungsintensiv, Schliesslich lassen sie sich an Funenerosionsmaschinen nur schlecht integrieren, da bei diesen Maschinen der Bearbeitungsbereich gut zugänglich sein muss und von Anbauten weitgehende freigehalten werden soll. Kettenantriebe, welche bis in den Arbeitsbereich reichen müssten, würden diese wichtige Forderung stören. Ausserdem ist das bei der Funkenerosion gebräuchliche Dielektrikum fettlösend. Ein stark fettbedürftiger Kettenantrieb ist mit einem solchen Lösungsmittel unverträglich.

Es ist Aufgabe der vorliegenden Erfindung, eine Vorrichtung zum Wechsel von Paletten an Funkenerosionsmaschinen zu schaffen, welche in besonderem Mass auf bauliche und be triebsmässige Eigenheiten von Funkenerosionsmaschinen Rücksicht nimmt und welche insbesondere für weit ausladende Tische an derartigen Maschinen geeignet ist.

Diese Aufgabe wird erfindungsgemäss durch die in den Patentansprüchen definierten Merkmale gelöst.

Der Vorteil dieser Massnahme liegt in einer aussergewöhnlich kompakten Wechseleinrichtung für Paletten, welche an der Maschine nirgends vorsteht und den Arbeitsbereich ohne jede Einschränkung freihält. Die Störanfälligkeit des Antriebes ist wegen der gerigen Zahl bewegter Teile wesentlich kleiner als für Kettenantriebe. Ausserdem lassen sich mit dieser Wechseleinrichtung auch Paletten auf extrem breiten Maschinentischen zuverlässig und positionsgenau verschieben, zumal die Schere aufgrund ihres ungewöhnlichen Antriebs im Gegensatz zu konventionellen Scherenantrieben mit konstanter Geschwindikeit bewegt wird.

Die Erfindung wird im folgenden anhand bevorzugter Ausführungsbeispiele mit Hilfe der Zeichnungen näher erläutert. Es zeigen:

Fig. 1 die schematische Aufsicht auf eine Funkenerosionanlage mit seitlich angesetzter Palettenstation und mit Palettenwechsler,

Fig. 2 die Aufsicht auf einen Antrieb zum Palettenwechsler und

Fig. 3 die Seitenansicht des Antriebs gemäss Fig. 2.

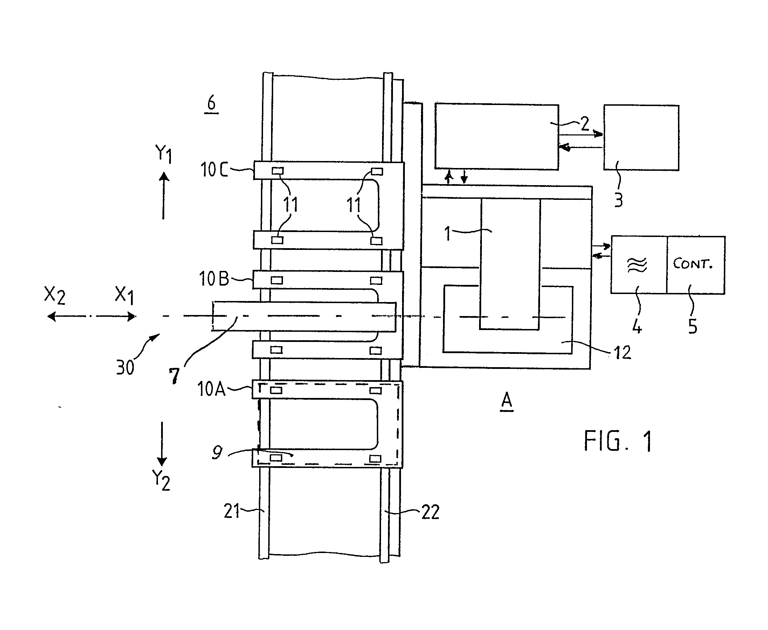

Fig. 1 zeigt die Aufsicht auf eine Funkenerosionsmaschine mit den zugehörigen Hilfs- und Nebenaggregaten. Ausser der Funkenerosionsmaschine 1 sind ein Dielektrikum-Aggregat 2, eine Kühlvorrichtung 3, ein Generator 4 und eine Maschinensteuerung 5 vorgesehen. Auf einzelne Maschinenkomponenten der Erosionsmaschine, welche an sich bekannt sind, wird hier nicht näher eingegangen. Die Anlagenteile sind derart installiert, dass ein Bedienungsbereich A frei bleibt und die ungehinderte Zugänglichkeit zum Bearbeitungsteil der Maschine im Sinne der Benutzerfreundlichkeit gewährleistet ist.

Auf einer Seite der Erosionsmachine 1 ist unmittelbar daneben, im Bereich des Tisches 12 der Maschine, eine Palettenstation 6 mit mehreren Paletten 9 vorgesehen. Integriert in diese Palettenstation 6 ist ein Palettenwechsler 30 zur Übergabe der Paletten an die Erosionsmachine. Der Palettenwechsler 30 ist mit einem Antrieb 7 versehen. Durch die Anordnung der Palettenstation 6 und des Palettenwechslers 30 am seitlichen Bereich der Erosionsmaschine 1 ist die freie Zugänglichkeit zum Arbeitsbereich A gewährleistet.

Die Palettenstation 6 besteht im Beispiel aus einer Schienenführung 21, 22, auf welcher mehrere Palettenaufnehmer 10 A, 10 B, 10 C verfahrbar angebracht sind. Auf der Schienenfürhung 21, 22 sind die wagenartigen Palettenaufnehmer mit geeigneten Mitteln, z.B. mit Hilfe von Rollen geführt. Die Palettenaufnehmer sind integrale Bestandteile der Palettenstation 6.

Zur Aufnahme und Halterung der Paletten 9 sind die Palettenaufnehmer 10 mit Aufsetzelementen 11 versehen, welche mit korrespondierenden, im einzelnen hier nicht dargestellten Elementen an der Unterseite der Paletten 9 zusammenwirken. Die Palettenaufnehmer 10 A, 10 B, 10 C sind in Richtung Y 1 bzw. Y 2 längs der Schienenführung 21, 22 verschiebbar.

Zum Aufsetzen bzw. Entfernen der Paletten 9 auf bzw. von der Funkenerosionsmaschine 1 ist ein als Lade- und Entladevorrichtung wirkender Palettenwechsler 30 an der Palettenstation 6 vorgesehen. Diese Ladevorrichtung ist in Richtung X 1 bzw. X 2 verschiebbar, wobei X 1 bzw. X 2 quer, vorzugsweise rechtwinklig zur Richtung Y 1 bzw. Y 2 verläuft. Die Verschiebung kann numerisch gesteuert erfolgen, wobei Anfangs-und Endposition programmierbar sind.

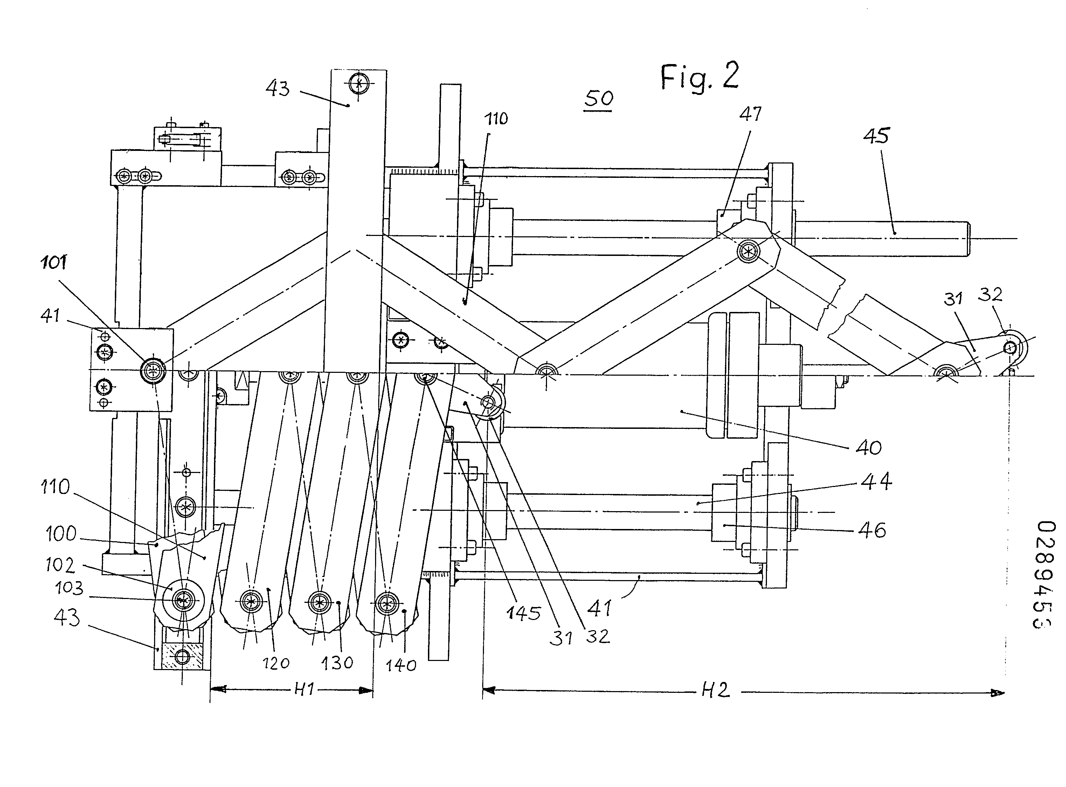

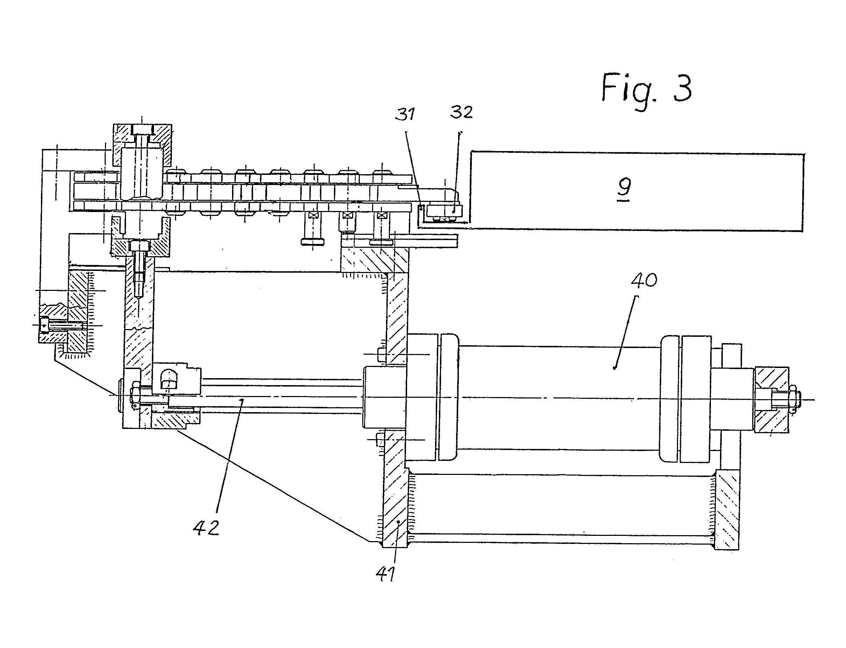

Der Wechsler 30 ist mit einer Palletkupplung 31 versehen, welche einen Greifer mit einer Rolle 32 an der Spitze aufweist. Mit dieser Einrichtung lassen sich die einzelnen Paletten 9 an den Wechsler 30 kraftschlüssig ankuppeln. Durch Wirkung des Antriebselementes 7, welches im folgenden anhand der Figuren 2 bis 3 näher beschrieben wird, werden die Paletten 9 auf den Maschinentisch 12 geschoben bzw. nach der Bearbeitung von diesem fortgezogen.

Beim Einfahren eines Palettenaufnehmers 10 mit aufgesetzter Palette 9 in den Wechselbereich des Palettenspeichers 6 greift die Palettenkupplung 32 des Wechslers 30 in der Palette 9 an. Die Palette 9 wird auf den Maschinentisch 12 in Richtung X1 geschoben und dort abgesenkt, so dass sich die Kupplung 32 vom Antrieb 7 automatisch löst.

Der Antrieb wird anschliessend zur Palettenstation zurückgefahren, wodurch der Arbeitsbereich A von Antriebsmitteln unbeeinträchtigt und damit frei zugänglich bleibt. Die Palette 9 wird mit Hilfe der erwähnten Aufsetz- und Zentriereinrichtungen, die sich an ihrer Unterseite befinden, auf dem Tisch 12 der Funkenerosionsmaschine 1 präzis und definiert aufgesetzt und anschliessend arretiert.

Im einzelnen besteht die Antriebseinrichtung 7 gemäss den Figuren 2 bis 3 aus einem Linearmotor, z.B. einem Hubzylinder 40, der in einem Gehäuse 41 fixiert ist. Das Gehäuse ist mit der Wechseleinrichtung 6 gemäss Fig. 1 verbunden. Eine Kolbenstange 42 des Hubzylinders weist querstehende Führungsschienen 43 auf, welche mit parallel zur Kohlenstange 42 verlaufenden Führungsstangen 44 und 45 verbunden sind. Diese Führungsstangen 44, 45 sind im Gehäuse 41 mit Hilfe von Lagern 46 und 47 axial verschiebbar geführt.

Wie sich aus beiden Halbfiguren der Figur 2 ergibt, von denen der linke Teil die eingezogene und der rechte Teil die ausgefahrene Antriebsvorrichtung zeigen, ist an den Führungsschienen 43 ein Scherenelement 50 angesetzt. Das oberste Glied 100 des Scherenelementes ist mit seinem inneren Schenkel mit Hilfe eines Bolzens 101 an Teilen des Gehäuses 41 gelenkig befestigt. Das äussere Ende des Scherengliedes 100 ist über eine Führungshülse 102 und einen zweiten Bolzen 103 in der Querführung 43 verschiebbar gelagert.

Am gleichen Bolzen 103 ist ferner der äussere Schenkel eines weiteren Scherengliedes 110 gelagert, dessen innerer Schenkel mit einem in der Figur nicht gezeigten mitteleren Bolzen am nächstfolgenden Scherenglied drehbar befestigt ist. Am untersten Scherenglied 140 verbindet der mittlere Bolzen 145 den inneren Schenkel des unteren Scherengliedes 140 mit der Palettenkupplung 31 und der Rolle 32, welche zur kraftschlüssigen Kupplung mit der Palette 9 dient.

Durch die Schere 50 wird eine Wegübersetzung vom maximalen Hub H1 des Linearmotors 40 auf den maximalen Ausfahrhub H2 vorgenommen, welcher der äussersten Palettenposition entspricht, der auf dem Maschinentisch 12 noch erreicht werden muss. Dabei kann H2 wesentlich grösser sein als H1.

Bei Betätigung des Hubzylinders 40 zum Ausfahren einer Palette 9 auf den Tisch 12 der Funkenerosionsmaschine 1 wird der Hubzylinder 40 mit einem Druckmedium, beispielsweise mit hydraulischem oder pneumatischen Fluid beaufschlagt, so dass sich die Kolbenstange 42 und mit ihr die Führungsschienen 43 gemäss dem rechten Teil der Figur 2 nach unten bewegen.

Der hier gewählte unkonventionelle Antrieb der Schere an ihren äusseren Schenkeln hat einen gleichmässigen Bewegungsablauf längs der Antriebsachse zur Folge. Dabei ergibt sich ein besonders harmonischer Bewegungsablauf: die anfänglich hohen Betätigungskräfte, welche der gewählten Scherenkonstruktion eigen sind, fallen mit anfänglich geringen Beibungskräften der Palette zusammen, da diese auf der Palettenstation 6 auf Rollen gelagert ist. Sobald die Palette auf dem Maschinentisch 12 aufsetzt, kommt eine Gleitführung zum Tragen, welche mit höheren Reibungswiderständen verbunden ist, wobei in dieser Position die Schere 50 einen höheren Wirkungsgrad für die Kraftübertragung aufweist als in der Anfangsposition. Über die gesamte Hublänge der Schere 50 ist damit der auf die Palette wirkende Kraftverlauf weitgehend gleichmässig. Die beschriebene Anordnung garantiert ferner eine konstante Verschiebegeschwindigkeit über die gesamte Hublänge, was besonders bei grossen Palettengewichten von erheblichem vorteil ist.

Anstelle des beschriebenen Hydraulikzylinders lassen sich auch andere geeignete Elemente als Hubantrieb 40 verwenden. Geeignet sind z.B. motorgetriebene Spindelantriebe oder elektrische Linearmotoren.

**Patentansprüche**

1. Vorrichtung zum Beschicken und Entladen einer Funkenerosionsmaschine (1) mit Werkstück- und/oder Werkzeugpaletten (9), mit einer neben der Maschine befindlichen Palettenstation (6) und mit einem mit der Palettenstation verbundenen Palettenwechsler (30) zur gesteuerten Übergabe der Paletten zwischen der Palettenstation und der Maschine, dadurch gekennzeichnet, dass der Palettenwechsler (30) mit einem in Übergaberichtung ausfahrbaren Scherenantrieb (50) versehen ist, der als lineare Übersetzung eines Hubantriebs (40) ausgebildet ist und dessen äussere Scherenschenkel (110) auf der Antriebsseite mit dem Hubantrieb (40) in Verbindung stehen, während die Innenschenkel der gleichen Scherenelemente ortsfest (101) fixiert sind, und dass auf der Abtriebsseite (146) des Scherenantriebs (50) lösbare Kupplungsmittel (32) zur kraftschlüssigen Verbindung mit den Paletten (9) vorgesehen sind.

2. Vorrichtung nach Anspruch 1, dadurch gekennzeichnet, dass der Hubantrieb (40) innerhalb des Wirkbereichs der Schere (50) angeordnet ist, wobei der ausgefahrene Hubantrieb (40) die eingefahrene Position der Schere (50) definiert und umgekehrt.

3. Vorrichtung nach Anspruch 1, dadurch gekennzeichnet, dass die Verbindung zwischen dem Hubantrieb (40) und den äusseren Scherenschenkeln (110) über eine quer zur Hubrichtung verlaufende Führungsschiene (43) erfolgt.

4. Vorrichtung nach Anspruch 3, dadurch gekennzeichnet, dass die Führungsschiene (43) mit Führungen (44-47) in der Hubrichtung versehen ist und vom Hubantrieb (40) in Hubrichtung betätigbar ist.

5. Vorrichtung nach Anspruch 3, dadurch gekennzeichnet, dass die äusseren Scherenschenkel (110) in der Führungsschiene (43) über Gleit- oder Rollenführungen (102, 103) wirkverbunden sind.

P S11

0289453

FIG. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 240 962 (TOSHIBA) <br> * Anspruch 2 * <br> ----- | 1 | B 23 Q 7/14 <br> B 23 H 11/00 |
| | | | **RECHERCHIERTE SACHGEBIETE (Int. Cl.4)** <br><br> B 23 Q <br> B 23 H |

Der vorliegende Recherchenbericht wurde für alle Patentansprüche erstellt

| Recherchenort | Abschlußdatum der Recherche | Prüfer |
|---|---|---|
| DEN HAAG | 03-05-1988 | DAILLOUX C. |